**Europäisches Patentamt**

**European Patent Office**

**Office européen des brevets**

(19)

(11) Veröffentlichungsnummer: **0 098 518**
**B1**

(12) **EUROPÄISCHE PATENTSCHRIFT**

(45) Veröffentlichungstag der Patentschrift:
**14.10.87**

(21) Anmeldenummer: **83106334.2**

(22) Anmeldetag: **29.06.83**

(51) Int. Cl.⁴: **C 25 B 13/04,** B 01 D 39/20,
B 01 D 39/10

(54) **Poröse, korrosionsstabile Zwischenwände aus mit Oxidkeramik beschichteten Metallnetzen.**

(30) Priorität: **01.07.82 DE 3224556**

(43) Veröffentlichungstag der Anmeldung:
**18.01.84 Patentblatt 84/3**

(45) Bekanntmachung des Hinweises auf die Patenterteilung:
**14.10.87 Patentblatt 87/42**

(84) Benannte Vertragsstaaten:
**BE DE FR GB IT LU NL**

(56) Entgegenhaltungen:
**EP-A-0 046 252**

**CHEMIE-INGENIEUR-TECHNIK, Band 52, Nr. 5, 1980, Seiten 438-439, Verlag Chemie, Weinheim, DE., J. FISCHER et al.: "Grundlagen und Basistechnologie zur Weiterentwicklung der alkalischen Wasser-Elektrolyse"**

(73) Patentinhaber: **HOECHST AKTIENGESELLSCHAFT, Postfach 80 03 20, D-6230 Frankfurt am Main 80 (DE)**

(72) Erfinder: **Wendt, Hartmut, Prof., Dr., Forsthausstrasse 33, D-6110 Dieburg (DE)**
Erfinder: **Hofmann, Hans, Dr., Brentanostrasse 4, D-6052 Mühlheim (DE)**

# 0 098 518

**Beschreibung**

Die Erfindung betrifft poröse, korrosionsstabile, elektrischen Strom nicht leitende Zwischenwände, die aus mit Oxidkeramik beschichteten Metallnetzen bestehen, die insbesondere als Diaphragmen und Filter zum Betrieb von Elektrolysen sowie zur Stofftrennung und -filtration in sauren, neutralen und alkalischen Lösungen, geeignet sind.

Korrosionsstabile Diaphragmen und Filter aus mit Oxidkeramik beschichteten Metallnetzen sind aus Chemie Ing. Technik 52 (1980) Nr. 5, Seiten 438 bis 439 bekannt. Die Oxidkeramik besteht aus Mischoxiden von zweiwertigen Metallen der Erdalkalien und Übergangsmetallen sowie Metallen der Gruppe IVA und VA des Periodensystems. Nachteilig bei diesen Diaphragmen und Filter ist das schlechte Haften der Oxidkeramik auf dem Metallnetz. Ist die Kersmikschicht beschädigt, bröckelt sie leicht vom Metallnetz ab.

Aus der EP-A-00 46 252 sind poröse Oxid-Diaphragmen für die alkalische Wasserelektrolyse bekannt, deren durch einen netzartigen oder siebartigen Träger unterstützte Oxid-Schicht durch Oxidation von Metallpulverteilchen erhalten wird, die durch Kaltverdichtung auf dem Träger aufgebracht wurden.

Es stellte sich demnach die Aufgabe, Metallnetz unterstützte Diaphragmen und Filter zu schaffen, die einen innigen Verbund zwischen Keramik und Metallnetz und damit verbesserte mechanische Stabilität aufweisen.

Die Aufgabe wird dadurch gelöst, daß die Schicht aus Oxidkeramik Metallteilchen in Mengen von 15 bis 75 Gew.-% bezogen auf das Gewicht der Oxidkeramik enthält. Der mittlere Porendurchmesser der Oxidkeramik kann 5 - 50 μm betragen. Die Oxidkeramik kann Mischoxide bestehend aus Oxiden der Erdalkalimetalle und amphoterer Oxide der Metalle der Gruppe IVA, VA oder VIA des Periodensystems enthalten. Die Mischoxide bestehen vorzugsweise aus Erdalkalititanat. Die Metallteilchen können aus Metallen der Gruppe IVA oder VIII des Periodensystems bestehen.

Unter dem Ausdruck Mischoxid werden hier Gemische mehrerer Oxide sowie Verbindungen aus mehreren Oxiden z.D. Doppeloxide oder Tripeloxide verstanden.

Für die oxidkeramische Komponente der Keramik eignen sich insbesondere Verbindungen einerseits von Oxiden des Calciums, Strontiums, Pariums und andererseits von amphoteren Oxiden des Titans, Zirkons, Hafniums, Niobs, Tantals, Molybdäns und/oder Wolframs. Als metallische Komponente der Keramik sowie für das Metallnetz eignen sich insbesondere Nickel, Titan oder Zirkon.

Für die Herstellung der porösen Zwischenwände wird eine Vormischung aus für die Keramik nötigen Metalloxiden und Metallteilchen auf ein Metallnetz aufgetragen. Statt der reinen Metallteilchen kann auch das entsprechende Oxid verwendet werden, vorausgesetzt, es läßt sich unter den Herstellungsbedingungen für die Zwischenwände zu Metall reduzieren. Um den gewünschten Porendurchmesser zu erzielen, können die Komponenten für die Vormischung, d.h. die Oxide und Metalle gemeinsam oder getrennt gemahlen und in gesiebten Fraktionen zusammengestellt werden. Die Vormischung kann als binderhaltige Paste auf das Metallnetz aufgemalt, aufgedruckt oder in anderer geeigneter Weise mit dem gewünschten Beschichtungsgewicht aufgebracht werden. Anschließend wird der Binder ausgeheizt und die Zwischenwände bei Temperaturen unterhalb des Schmelzpunktes der metallischen Komponente unter reduzierender oder inerter Atmosphäre (CO, $H_2$ oder $N_2$) gesintert.

**Beispiel 1**

Eine Mischung enthaltend 50 Gew.-% Nickolpulver und 50 Gew.-%. Nickeltitanat mit einer mittleren Korngröße von 5 μm wurde bei 1100°C 4 Stunden lang gesintert. Der so gesinterte Scherben wurde zerkleinert und in einer Kugelmühle gemahlen. Das Mahlgut wurde durch Sieben in verschiedene Fraktionen getrennt, und zwar in Fraktionen mit Korngrößen ⩽ 5 μm, ⩽ 20 μm und ⩽ 50 μm. Aus diesen drei Fraktionen wurden die folgenden Mischungen für die Proben a), b), c) hergestellt:

| Korngröße: | a) | b) | c) |
|---|---|---|---|
| ⩽ 5 μm | 100 gew.-% | 60 Gew.-% | 50 Gew.-% |
| ⩽ 20 μm | - | 40 Gew.-% | 30 Gew.-% |
| ⩽ 50 μm | - | - | 20 Gew.-% |

Aus der Probe a) wurde durch Mischen mit einer 5 Gew.-% Carboxymethylcellulose enthaltenden Lösung eine druckfähige Paste hergestellt und damit nach dem Siebdruckverfahren ein Nickelnetz mit 0,34 mm Maschenweite und 0,25 mm Drahtstärke beidseitig in je drei Arbeitsgängen bedruckt.

Die "grüne" Zwischenwand wurde getrocknet und nach thermischem Zersetzen des organischen Binders bei 1100°C für 45 Minuten unter einer $H_2/N_2$ Atmosphäre, bei der das Verhältnis $H_2/N_2$ gleich 30:70 war, in einem Kammerofen gesintert. Aus den Proben b) und c) wurde durch Mischen mit einem Gemisch aus 80 Gew.-% Leinöl und 20 Gew.-% Butanol jeweils eine Paste hergestellt, die jeweils auf ein Nickelnetz wie bei Probe a) verwendet, aufgemalt wurde. Die "grünen" Zwischenwände wurden getrocknet und nach thermischem Zersetzen des Binders in einem Kammerofen gesintert, und zwar Probe b) zwei Stunden bei 1100°C unter $H_2/N_2$ Atmosphäre bei der das Veihältnis $H_2$:$N_2$ gleich 40:60 war und Probe c) zwei Stunden bei 1200°C unter $H_2/N_2$ Atmosphäre bei der das Verhältnis $H_2$:$N_2$ gleich 50:50 war.

2

Der Flächenwiderstand der so hergestellten Zwischenwände beträgt bei 25°C in 50 gew.-%iger KOH ca. 400 mΩcm$^2$; die dynamische Durchlässigkeit ca. 0,5 cm$^3$ poise/bar cm$^2$. Die Zwischenwände sind kurzschlußsicher bei Anlegen einer Spannung von 120 Volt.

**Beispiel 2**

Dine Mischung aus 35 Gew.-% Nickeloxid und 65 Gew.-% Bariumtitanat wurde wie in Beispiel 1 gesintert, zerkleinert, gemahlen und gesichtet. Die Pulvermischung, deren maximale Korngröße ⩽ 50 µm war, wurde mit einer 2 %igen Rohrzuckerlösung angeteigt und die Paste auf ein Nickelnetz mit 0,52 mm Maschenweite und 0,3 mm Drahtdurchmesser aufgetragen. Das beschichtete Netz wurde durch langsames Aufheizen in einem Kammerofen unter Luftatmosphäre vorverfestigt und der Rohrzucker verkohlt. Danach wurde unter H$_2$-Atmosphäre 75 Minuten bei ca. 1400°C gesintert und sodann im Laufe von 2 Stunden auf 600°C abgekühlt. Der flächenspezifische Widerstand der so hergestellten Zwischenwand beträgt bei 25°C ca. 300 mΩcm$^2$, die hydrodynamische Durchlässigkeit 0,55 cm$^3$ poise/bar cm$^2$. Die Oxidkeramik haftet gut auf dem Trägernetz. Sie bröckelt bei mechanischer Beschädigung nicht ab. Die Zwischenwand ist kurzschlußsicher bei Anlegen einer Spannung von 100 Volt.

**Patentansprüche**

1. Poröse, korrosionsstabile, elektrischen Strom nicht leitende Zwischenwände aus mit Oxidkeramik beschichteten Metallnetzen, dadurch gekennzeichnet, daß die Schicht aus Oxidkeramik Metallteilchen in Mengen von 15 - 75 Gew.-% bezogen auf das Gewicht der Oxidkeramik enthält.

2. Zwischenwände nach Anspruch 1, dadurch gekennzeichnet, daß die Schicht aus Oxidkeramik einen mittleren Porendurchmesser von 5 bis 50 µm aufweist.

3. Zwischenwände nach Anspruch 1, dadurch gekennzeichnet, daß die Oxidkeramik Mischoxide enthält, die bestehen aus Oxiden der Erdalkalimetalle und amphoterer Oxide der Metalle der Gruppe IVA, VA oder VIA des periodischen Systems.

4. Zwischenwände nach Anspruch 3, dadurch gekennzeichnet, daß die Mischoxide aus Erdalkalititanat bestehen.

5. Zwischenwände nach Anspruch 1, dadurch gekennzeichnet, daß die Metallteilchen aus Metallen der Gruppe IVA oder VIII des Periodensystems bestehen.

**Claims**

1. Porous, corrosion-proof, non-conductive partitions consisting of metal nets coated with oxide ceramics, wherein the oxide ceramics layer contains metal particles in amounts of from 15 to 75 weight %, relative to the weight of the oxide ceramics.

2. Partitions as claimed in Claim 1, wherein the oxide ceramics layer has an average pore diameter of from 5 to 50 µm.

3. Partitions as claimed in Claim 1, wherein the oxide ceramics contain mixed oxides consisting of oxides of the alkaline earth metals and amphoteric oxides of the metals of group IV A, V A or VI A of the Periodic Table.

4. Partitions as claimed in Claim 3, wherein the mixed oxides consist of alkaline earth titanate.

5. Partitions as claimed in Claim 1, wherein the metal particles consist of metals of group IV A or VIII of the Periodic Table.

**Revendications**

1. Cloisons poreuses, stables à la corrosion, ne conduisant pas le courant électrique, constituées de réseaux métalliques revétus de céramique oxydée, caractérisées en ce que la couche de céramique oxydée contient des particules métalliques en des quantités de 15 à 75 % en poids par rapport au poids de la céramique oxydée.

2. Cloisons selon la revendication 1, caractérisées en ce que la couche de céramique oxydée a un diamètre moyen de pore de 5 à 50 µm.

3. Cloisons selon la revendication 1, caractérisées en ce que la céramique oxydée contient des oxydes mixtes, qui sont constitués d'oxydes des métaux alcalino-terreux et d'oxydes amphotères des métaux des Groupes IVA, VA ou VIA du Tableau Périodique.

4. Cloisons selon la revendication 3, caractérisées en ce que les oxydes mixtes sont constitués de titanate de métaux alcalino-terreux.

5. Cloisons selon la revendication 1, caractérisées en ce que les particules métalliques sont constituées de métaux du Groupe IV A ou VIII du Tableau Périodique.